# FASCICULE DE BREVET EUROPEEN

(11) **EP 0 861 178 B1**
(45) Date de publication et mention de la délivrance du brevet: **08.12.1999**
(21) Numéro de dépôt: 96931016.8
(22) Date de dépôt: 04.09.1996
(51) Int. Cl.: B60T 11/16, B60T 11/18

(54) **GENERATEUR DE PRESSION HYDRAULIQUE A AMORTISSEMENT DE VIBRATIONS**
HYDRAULISCHER DRUCKGENERATOR MIT SCHWINGUNGSDÄMPFUNG
HYDRAULIC PRESSURE GENERATOR WITH VIBRATION DAMPING

(30) Priorité: 14.11.1995 IT TO950915
(43) Date de publication de la demande: 02.09.1998
(73) Titulaire: ROBERT BOSCH SISTEMI FRENANTI S.p.A., 26013 Crema (IT)
(72) Inventeur: CADEDDU, Leonardo, I-26013 Crema (IT)
(74) Mandataire: Bee, Joachim
(86) Numéro de dépôt international: EP9603880
(87) Numéro de publication internationale: WO9718115

(56) Documents cités:
- EP-A- 0 318 629
- WO-A-91/13785
- GB-A- 2 058 272
- US-A- 3 430 660

## Description

La présente invention concerne un générateur de pression hydraulique comprenant un corps percé d'un premier alésage cylindrique borgne dans lequel coulisse longitudinalement un ensemble piston mû par une tire de commande et portant un joint d'étanchéité qui délimite, dans le premier alésage, une chambre de pression dotée d'une sortie de pression, l'ensemble piston comprenant un cylindre dont une extrémité obturée est reliée à la tige de commande et dans lequel est percé un second alésage ouvert du côté de la chambre de pression, un piston auxiliaire coulissant dans le second alésage en y délimitant une chambre de compensation à volume variable qui renferme un organe déformable propre à exercer une force élastique entre le piston auxiliaire et l'extrémité obturée du cylindre.

Un dispositif de ce type est par exemple décrit dans le brevet européen EP - 0 318 629, qui concerne un générateur de pression notamment utilisable pour la commande hydraulique des embrayages de véhicules automobiles.

Quand un générateur de pression hydraulique est utilisé comme maître-cylindre pour l'embrayage d'un véhicule automobile, les pulsations axiales de l'arbre moteur, relié à l'ensemble de l'embrayage, donnent lieu à des vibrations mécaniques et hydrauliques qui sont transmises par le récepteur d'embrayage au maître-cylindre et en conséquence à la pédale, source de désagrément pour le conducteur.

Bien que le brevet précédemment mentionné ait précisément pour objet de proposer des moyens pour réduire ces vibrations, et bien que le dispositif décrit par ce brevet présente de ce point de vue des qualités appréciables, la courbe caractéristique liant la pression de sortie fournie par ce dispositif au déplacement de l'ensemble piston présente une zone d'infléchissement elle-même indésirable dans certaines circonstances particulières.

La présente invention se situe dans ce contexte, et a pour but de proposer un générateur de pression hydraulique dans lequel les variations mécaniques et hydrauliques sont amorties de façon efficace, mais dont la courbe caractéristique présente une plus grande linéarité.

A cette fin, le générateur de pression hydraulique de la présente invention est essentiellement caractérisé en ce que la chambre de compensation communique avec la chambre de pression à travers une restriction pratiquée dans un perçage longitudinal du piston auxiliaire, en ce qu'une première portion du piston auxiliaire reste à l'extérieur du second alésage, et en ce que le joint d'étanchéité est porté par la première portion du piston auxiliaire.

Selon un mode de réalisation préféré de l'invention, l'organe déformable comprend un manchon en matériau élastomère présentant un canal longitudinal placé en regard du perçage pratiqué dans le piston auxiliaire.

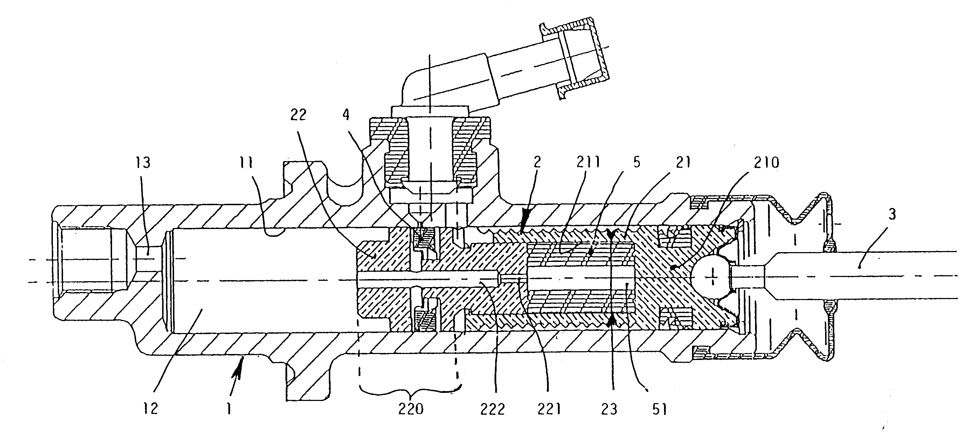

D'autres caractéristiques et avantages de l'invention ressortiront clairement de la description qui en est faite ci-après, à titre indicatif et nullement limitatif, en référence à la figure unique annexée, qui est une vue en coupe d'un générateur de pression conforme à l'invention.

Comme le montre cette figure, ce générateur de pression comprend essentiellement un corps 1. et un ensemble piston 2, ce dernier étant mû par une tige de commande 3 et composé lui-même d'un cylindre 21 et d'un piston auxiliaire 22.

L'ensemble piston 2 coulisse longitudinalement dans un premier alésage cylindrique borgne 11 percé dans le corps 1, et porte un joint d'étanchéité 4 qui délimite, dans ce premier alésage 11, une chambre de pression 12 dotée d'une sortie de pression 13.

Le cylindre 21 présente une extrémité obturée 210 qui est reliée à la tige de commande 3.

Ce cylindre 21 est par ailleurs percé d'un second alésage 211 qui est ouvert du côté de la chambre de pression 12 et dans lequel coulisse le piston auxiliaire 22.

Le piston auxiliaire 22 délimite, dans le second alésage 211, une chambre de compensation 23 à volume variable, qui renferme un organe déformable 5 propre à exercer une force élastique entre le piston auxiliaire 22 et l'extrémité obturée 210 du cylindre 21.

Selon l'invention, la chambre de compensation 23 communique avec la chambre de pression 12 à travers une restriction 221 pratiquée dans un perçage longitudinal 222 du piston auxiliaire 22.

Par ailleurs, une portion 220 du piston auxiliaire, qui porte le joint d'étanchéité 4, reste à l'extérieur du second alésage 211.

Enfin, selon un mode préféré de réalisation de l'invention, l'organe déformable 5 prend la forme d'un manchon en matériau élastomère, présentant un canal longitudinal 51 placé en regard de la restriction 221 pratiquée dans le piston auxiliaire 22.

Grâce à cet arrangement, la différence instantanée des pressions régnant respectivement dans la chambre de compensation 23 et dans la chambre de pression 12 est une fonction de la fréquence des variations de pression dans la chambre 12, cette différence étant par ailleurs nulle en l'absence de telles variations.

En effet, toute oscillation de pression dans la chambre de pression 12 produit une oscillation du piston auxiliaire 22 par rapport au cylindre 21, ce dont il résulte que le volume de fluide hydraulique présent dans la chambre de compensation 23 oscille également, l'énergie associée aux variations de pression dans la chambre de pression 12 étant ainsi dissipée par la déformation du manchon 5 et par le flux forcé de fluide hydraulique à travers la restriction 221.

La compression axiale du manchon 5 engendre une déformation radiale de ce dernier vers le canal longitudinal 51, partiellement contrecarrée par la pression hydraulique et les pulsations de pression existant dans la chambre 12 et transmises par le perçage 222 et la restriction 221.

## Revendications

1. Générateur de pression hydraulique comprenant un corps (1) percé d'un premier alésage cylindrique (11) borgne dans lequel coulisse longitudinalement un ensemble piston (2) mû par une tige de commande (3) et portant un joint d'étanchéité (4) qui délimite, dans le premier alésage, une chambre de pression (12) dotée d'une sortie de pression (13), l'ensemble piston (2) comprenant un cylindre (21) dont une extrémité obturée (210) est reliée à la tige de commande (3) et dans lequel est percé un second alésage (211) ouvert du côté de la chambre de pression (12), un piston auxiliaire (22) coulissant dans le second alésage (211) en y délimitant une chambre de compensation (23) à volume variable qui renferme un organe déformable (5) propre à exercer une force élastique entre le piston auxiliaire (22) et l'extrémité obturée (210) du cylindre (21), caractérisé en ce que la chambre de compensation (23) communique avec la chambre de pression (12) à travers une restriction (221) pratiquée dans un perçage longitudinal (222) du piston auxiliaire (22), en ce qu'une première portion (220) du piston auxiliaire (22) reste à l'extérieur du second alésage (211), et en ce que le joint d'étanchéité (4) est porté par la première portion (220) du piston auxiliaire.

2. Générateur de pression hydraulique suivant la revendication 1, caractérisé en ce que l'organe déformable (5) est essentiellement constitué par un manchon en matériau élastomère, présentant un canal longitudinal (51) placé en regard de la restriction (221) pratiquée dans le piston auxiliaire.

3. Générateur de pression hydraulique suivant les revendications 1 et 2, caractérisé en ce que la compression axiale du manchon 5 génère une déformation radiale de ce manchon vers le canal longitudinal (51), partiellement contrecarrée par la pression hydraulique et les pulsations de pression existant dans la chambre (12) et transmises par le perçage (222) et la restriction (221).

## Claims

1. A hydraulic pressure generator comprising a body (1) having a first blind cylindrical bore (11) formed therein, within which slides longitudinally a piston assembly (2) driven by an actuating rod (3) and bearing a sealing member (4) which defines, within the first bore, a pressure chamber (12) provided with a pressure outlet (13), the piston assembly (2) comprising a cylinder (21) having a closed end (210) which is connected to the actuating rod (3) and in which is formed a second bore (211) which is open on the pressure chamber side (12), an auxiliary piston (22) sliding in the second bore (211) and defining therein a compensation chamber (23) of variable volume which encloses a deformable member (5) adapted to exert an elastic force between the auxiliary piston (22) and the closed end (210) of the cylinder (21), characterized in that the compensation chamber (23) communicates with the pressure chamber (12) through a restriction (221) formed in a longitudinal duct (222) in the auxiliary piston (22), in that a first portion (220) of the auxiliary piston (22) remains outside the second bore (211), and in that the sealing member (4) is borne by the first portion (220) of the auxiliary piston.

2. A hydraulic pressure generator according to claim 1, characterized in that the deformable member (5) consists essentially of a sleeve of elastomeric material, having a longitudinal passage (51) positioned facing the restriction (221) formed in the auxiliary piston.

3. A hydraulic pressure generator according to claims 1 and 2, characterized in that the axial compression of the sleeve 5 generates a radial deformation of the sleeve towards the longitudinal passage (51), which is partially resisted by the hydraulic pressure and the pressure vibrations prevailing in the chamber (12) and transmitted through the duct (222) and the restriction (221).

## Patentansprüche

1. Hydraulikdruckgenerator mit einem Körper (1), der von einer ersten zylindrischen Blindbohrung (11) durchbrochen ist, in welcher longitudinal ein Kolbensatz (2) gleitet, der durch eine Steuerstange (3) bewegt wird und eine Dichtung (4) aufweist, die in der ersten Bohrung eine mit einem Druckausgang (13) versehene Druckkammer (12) begrenzt, wobei der Kolbensatz (2) einen Zylinder (21) enthält, dessen eines abgeschlossenes Ende (210) mit der Steuerstange (3) verbunden ist und der von einer zweiten Bohrung (211) durchbrochen ist, die zur Seite der Druckkammer (12) hin geöffnet ist, einen Hilfskolben (22), der in der zweiten Bohrung (211) gleitet und dort eine Ausgleichskammer (23) mit variablem Volumen begrenzt, die ein verformbares Mittel (5) einschließt, das dazu geeignet ist, eine elastische Kraft zwischen dem Hilfskolben (22) und dem abgeschlossenen Ende (210) des Zylinders (21) auszuüben, dadurch gekennzeichnet, daß die Ausgleichskammer (23) mit der Druckkammer (12) über eine Verengung (221) in Verbindung steht, die in einer longitudinalen Bohrung (222) des Hilfskolbens (22) ausgeführt ist, daß ein erster Abschnitt (220) des Hilfskolbens (22) außerhalb der zweiten Bohrung (211) verbleibt und daß die Dichtung (4) vom ersten Abschnitt (220) des Hilfskolbens getragen wird.

2. Hydraulikdruckgenerator nach Anspruch 1, dadurch gekennzeichnet, daß das verformbare Mittel (5) im wesentlichen aus einer Elastomerhülse besteht, die einen longitudinalen Kanal (51) aufweist, der gegenüber der im Hilfskolben ausgebildeten Verengung (221) angeordnet ist.

3. Hydraulikdruckgenerator nach den Ansprüchen 1 oder 2, dadurch gekennzeichnet, daß die axiale Kompression der Hülse (5) eine radiale Verformung dieser Hülse hin zum longitudinalen Kanal (51) erzeugt, der zum Teil durch den hydraulischen Druck und die in der Kammer (12) bestehenden Druckschwankungen, die durch die Bohrung (222) und die Verengung (221) übertragen werden, entgegengewirkt wird.
